# EUROPEAN PATENT SPECIFICATION

(11) **EP 2 566 822 B1**
(45) Date of publication and mention of the grant of the patent: **11.03.2015**
(21) Application number: 11713798.4
(22) Date of filing: 12.04.2011
(51) Int. Cl.: C03B 27/044, C03B 35/20, C03B 40/00

(54) **HETEROGENEOUS FABRIC FOR QUENCHING RING**
HETEROGENES GEWEBE FÜR QUENCHRING
TISSU HÉTÉROGÈNE POUR PRESSE DE TREMPAGE

(30) Priority: 07.05.2010 EP 10162294
(43) Date of publication of application: 13.03.2013
(73) Proprietor: NV Bekaert SA, 8550 Zwevegem (BE)
(72) Inventor: DE RIDDER, Frank, B-9308 Hofstade - Aalst (BE); CLAES, Raf, 81547 München (DE)
(74) Representative: Messely, Marc
(86) International application number: PCT/EP2011/055658
(87) International publication number: WO 2011/138131

(56) References cited:
- WO-A1-94/01373
- WO-A1-97/08108
- US-A- 5 328 496
- US-A- 5 383 950

## Description

### Technical Field

The present invention relates to a fabric for covering at least partially a ring for quenching glass. The invention also relates to an assembly of a quenching ring and such a fabric.

### Background Art

The process for bending glass which is to be used e.g. as car glass in windows of vehicles, mainly comprises the following steps: loading the glass to a furnace or oven, heating the glass above its weakening temperature in the furnace or oven, bending the heated glass and tempering or quenching the bent glass.

During the quenching or tempering phase the glass is not only cooled down to ambient temperature but at the same time internal tensions are created inside the glass due to the speed of cooling. At the external surfaces of the glass the temperature is decreasing more quickly than inside the glass. This temperature gradient creates tensions which stick inside the glass above a certain cooling speed. In case the cooling speed is too low, the tensions are too low and the glass does not shatter in particles of the required size in case of impact. If the cooling speed is too high, the tensions become too high and the glass too brittle and the glass does not shatter in particles of the required size in case of impact. Hence, the tempering process is a process which must be controlled within narrow tolerances.

During the tempering or quenching process, the border zones of the bent glass are resting on a so called tempering or quenching ring, further referred to as a quenching ring. This quenching ring is provided with apertures or openings to allow cooling air to be blown onto the glass. A heat resistant separation fabric is covering the quenching ring. This fabric is usually a knitted or woven fabric able to withstand high temperatures and permeable to air so as not to disturb the circulation of the pressurized cooling air which is used for quenching. It is a standard practice to use a knitted or woven fabric with relatively wide meshes for this purpose. US 5 328 496 also discloses fabric coverings for annular molds.

A drawback of this open permeable fabric is that it leaves markings on the border zones of the glass. In addition, the glass may exhibit undulations. For many years, this drawback has been accepted. This is now less and less the case.

One of the reasons of this decreasing degree of acceptance is that front, side and rear car glasses used to be embedded in a rubber ring. So any marking present on the borders of the glasses were at least partially hidden by the rubber ring. Currently the car glasses are glued on the frame of the car so that the borders of the car glasses become fully visible. Furthermore, increasing use is made of an enamel strip on the glass which makes markings more visible.

Another reason for this decreasing degree of acceptance is that the rear car glass of some type of cars, particularly the high-end cars and sport cars, are placed under an angle which is smaller and smaller. This smaller angle makes markings less and less acceptable since this smaller angle amplifies any markings that are present.

In addition, the use of black ink at the borders of the car glass where antennas are integrated, also makes markings, if present, more visible.

Vibrations in the car during driving the car can lead to breakage of the glass when the edge stress of the glass is too high.

Hence, markings and undulations are less and less accepted. And edge stress levels of the glass have to be within proper value ranges.

### Disclosure of Invention

It is a general object of the present invention to avoid the drawbacks of the prior art.

It is a particular object of the present invention to provide a heat separation material for a quenching or tempering ring which leaves less marking on the car glass.

It is another object of the present invention to provide a heat separation material for a quenching or tempering ring which leaves less undulation on the car glass.

It is another object of the present invention to provide a heat separation material for a quenching or tempering ring which allows to have better edge stress levels of the glass.

According to a first aspect of the present invention, there is provided a fabric for covering at least partially a ring for quenching glass which has been bent. The fabric comprises at least three strips: a strip of a high-density knitted structure for quenching the glass and at least two strips of lower density structure for attaching the fabric to the ring. The difference in density between the high-density knitted structure and the lower density knitted structures is preferably created by a different numbers of stitches per unit of area: the high-density knitted structure has a higher number of stitches per unit of area than the lower density knitted structures. Preferably, the high-density knitted structure has between 8 and 115 stitches per square centimeter, e.g. between 15 and 75 stitches per square centimeter, more preferably between 25 and 50 stitches per square centimeter. The fabric can e.g. be produced on a warp knitting machine or on a Rachel machine; with a single needle bed or with a double needle bed.

Up to now it was an accepted practice in the industry to use open fabrics for covering the quenching ring in order to allow sufficient amounts of quenching air to cool down the just bent car glass. These open fabrics have net structures with relatively large openings. The cooling air directly contacts the car glass through the openings but has to pass through the fabric material at the borders of the openings. At the locations where the car glass is in contact with the fabric material the speed of cooling is much slower than inside the openings. This difference in speed of cooling causes undulations in the surface of the car glass. In addition, the relatively rough structure of the open fabric causes markings in the glass.

In contrast to this accepted practice, the present invention has a high-density zone where there is an increased fabric density, preferably as an increased population of stitches which all support more or less equally the glass so that the glass is borne by much more stitches and so that the local force is more homogeneously distributed and the local pressure is much smaller than in the prior art.

US-A-5,328,496 discloses a heat separation material for a ring used in the manufacturing of bent car glass. The heat separation material has two parts, a dense part and an open, less dense, part. However, in distinction with the present invention, the dense part is used for displacement of the glass over the ring during a bending operation, while the open part is used for quenching or tempering.

In an embodiment of the first aspect of the present invention, the strips of lower density structure have a knitted structure with less stitches per square centimeter than the strip with the high-density structure.

The strips may be connected to each other by means of knitting or by means of stitching.

In a preferable embodiment of the first aspect of the present invention, the fabric comprises three strips: a central zone of a high-density knitted structure for quenching the glass and two strips of a lower density for fixing the fabric to the quenching ring.

Despite the high-density strip for quenching and against the accepted opinion, the dense part in the fabric still has sufficient air permeability to perform the quenching operation. Preferably, the high-density knitted structure has an air permeability of at least 500 l/dm²/min, e.g. more than 600 l/dm²/min, and more preferably at least 750 l/dm²/min, e.g. 850 l/dm²/min. The air permeability is measured using an underpressure of 100 Pa.

In one embodiment of the first aspect of the invention, the strip of the high-density knitted structure is made from one hundred percent stainless steel yarns. In comparison with blended yarns or with yarns of another material, one hundred stainless steel yarns have the advantage of providing a dense and uniform structure with a reduced risk of leaving markings on the glass. Stainless steel fibers, with a diameter less than 40 micrometers, e.g. less than 25 micrometers, can be obtained by a bundle drawing technique. This technique is disclosed e.g. in US-A-2 050 298, US-A-3 277 564 and in US-A-3 394 213. Metal wires are forming the starting material and are covered with a coating such as iron or copper. A bundle of these covered wires is subsequently enveloped in a metal pipe. Thereafter the thus enveloped pipe is reduced in diameter via subsequent wire drawing steps to come to a composite bundle with a smaller diameter. The subsequent wire drawing steps may or may not be alternated with an appropriate heat treatment to allow further drawing. Inside the composite bundle the initial wires have been transformed into thin fibers which are embedded separately in the matrix of the covering material. Such a bundle preferably comprises no more than 2000 fibers, e.g. between 500 and 1500 fibers. Once the desired final diameter has been obtained the covering material can be removed e.g. by solution in an adequate pickling agent or solvent. The final result is the naked fiber bundle. The naked fiber bundle can then be spun into a yarn.

Another manufacturing technique to make stainless steel fibers is machining. Machining of fibers is disclosed e.g. in US-A-4 930 199. A strip of a thin metal plate is the starting material. This strip is wound around the cylindrical outer surface of a rotatably supported main shaft a number of times and is fixed thereto. The main shaft is rotated at constant speed in a direction opposite to that in which the plate material is wound. A cutter having an edge line expending perpendicular to the axis of the main shaft is fed at constant speed. The cutter has a specific face angle parallel to the axis of the main shaft. The end surface of the plate material is cut by means of the cutter.

As an alternative to bundle drawing, metal fibers can also be made by starting from a hot rolled billet. This method is disclosed, amongst others, in US-A3 394 213, JP-A-51-171163, JP-A-62-259612 or JP-A-61-137623. This method is claimed to be less expensive than the technique of bundle drawing. Metal wire rods are packed together with a separating or barrier material, e.g. iron or very low carbon steel, in a tube or a brick and submitting this composite to a hot rolling operation possibly followed by a cold wire drawing operation. In difference with the technique of bundle drawing, the metal fibers obtained by starting from hot rolled composites, have a cross-section which differs to a greater extent from a circle. Moreover, there is a difference in cross-section between the fibers in the composite. The fibers at the outer side of the composite are radially more deformed to a more rectangular profile than are the fibers at the inner side of the composite. If the separating or barrier material is iron, the roughness of the fibers is also higher than in case copper is used as matrix.

In another embodiment of the first aspect of the invention, the strip of the high-density knitted pattern is made from yarns comprising stainless steel fibers and man made non-metal fibers such as PBO fibers or glass fibers or a combination thereof. PBO fibers have the advantage of giving an increased degree of softness to the high-density part. The full name of PBO fibers is poly(p-phenylene-2,6-benzobisoxazole) fibers. A typical percentage lies between 20% and 40% stainless steel fibers and thus between 80% and 60% man-made fibers. A good combination is about 30% stainless steel fibers and 70% PBO fibers.

Preferably, at least one of the strips of a lower density is made from yarns comprising stainless steel fibers and man-made fibers such as glass fibers or PBO fibers. Even more preferred, two strips of a lower density are made from yarns comprising stainless steel fibers and man-made fibers such as glass fibers or PBO fibers. The presence of glass fibers or of PBO fibers in the strips of lower density increases the thermal insulation of the lower density strips. An increased thermal insulation in the strips of lower density reduces the quenching effect of the strips of lower density so that quenching only happens in the central high-density zone, which makes it easier to control this quenching.

The strip of the high-density knitted structure may have a circular knitting structure, a weft knitting structure, a warp knitting structure or a Rachel-warp knitting structure.

The strip of the high-density knitted structure may have a demi-simple or tricot binding, a Charmeuse binding, or a satin binding.

One or more of the strips of a lower density may have an eyelet knitted structure.

According to a second aspect of the present invention, there is provided an assembly of a quenching ring and a fabric according to the first aspect of the invention. The quenching ring has two zones, a quenching zone with apertures to allow the air to penetrate and to cool down the glass, and a zone provided with fixations. The strips of the high-density knitted structure covers the quenching zone and the strips of a lower density cover the zones provided with the fixations and are fixed to the fixations. This quenching ring is preferably not used for bending but only for quenching.

### Brief Description of Figures in the Drawings

Figure 1 gives a general view of a fabric according to the invention;
Figure 2 explains the difference between an open stitch and a closed stitch;
Figure 3 gives a detailed view of a fabric according to the invention;
Figures 4(a), 4(b), 4(c), 4(d), 4(e) give examples of knitting stitches for the high-density strip of the fabric according to the invention;
Figures 5(a) and 5(b) give examples of knitting stitches for the low-density strip of the fabric according to the invention;
Figure 6(a) illustrates a quenching ring and Figure 6(b) gives a detail of the quenching ring.

### Mode(s) for Carrying Out the Invention

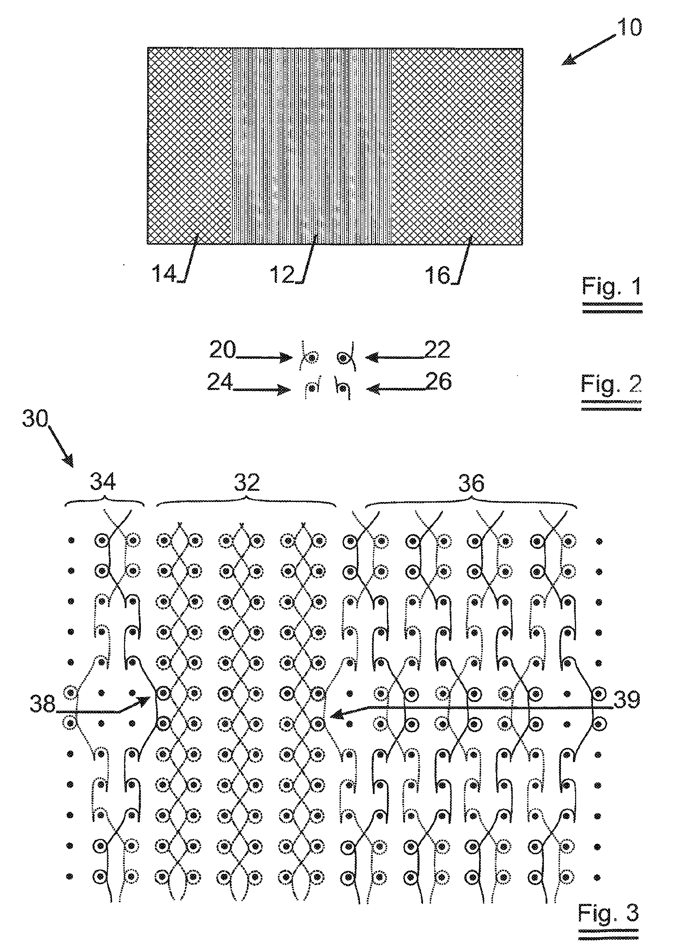

Figure 1 illustrates a fabric 10 according to the invention. The fabric 10 comprises a central strip 12 of a high-density knitted structure. This central strip is to cover the quenching zone of the quenching ring. Two strips 14 and 16 of a lower density are connected to the central strip 12. The three strips form the fabric 10. The side strips 14 and 16 are used to fix the fabric 10 to the quenching ring. Strips 14 and 16 also function as a thermal insulation during the quenching process so that the quenching process is occurring only in the quenching zone at the level of the high-density central strip 12.

As a form of introduction to the following detailed figures of knitting structures, Figure 2 illustrates the difference between closed knitting stitches 20, 22 and open knitting stitches 24, 26.

Figure 3 illustrates in detail an embodiment of fabric 30 according to the first aspect of the invention. The fabric has three strips: a central high-density strip 32, a left low-density strip 34 and a right low-density strip 36. Strip 34 is connected to strip 32 by means of common stitches 38 and strip 36 is connected to strip 32 by means of common stitches 39. In the embodiment of Figure 3, the high-density central strip 32 has double tricot closed knitting stitches.

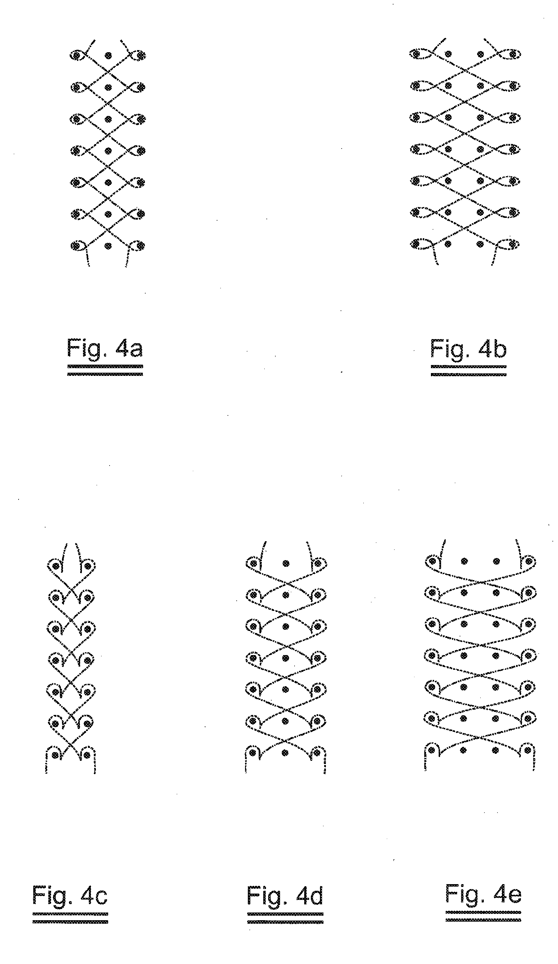

Figures 4(a), 4(b), 4(c), 4(d), 4(e) give other embodiments of knitting stitches for the high-density strip 32 of the fabric 30.

Figure 4(a) illustrates a knitting structure with double Charmeuse closed stitches.

Figure 4(b) illustrates a knitting structure with double satin closed stitches.

Figure 4(c) illustrates a knitting structure with double tricot open stitches.

Figure 4(d) illustrates a knitting structure with double Charmeuse stitches.

Figure 4(e) illustrates a knitting structure with double satin open stitches.

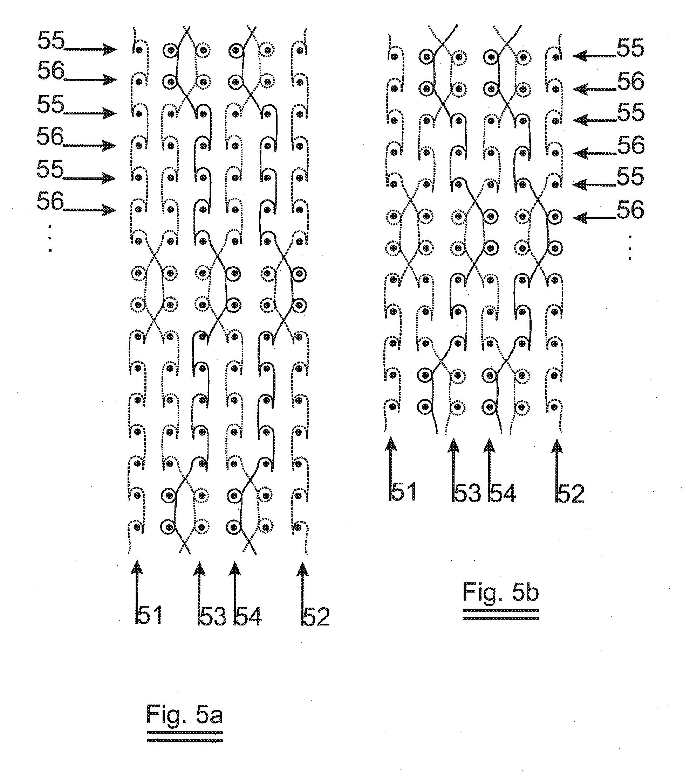

Figures 5(a) and 5(b) give examples of knitting stitches for the low-density strips 34, 36 of the fabric 30.

Figure 5(a) illustrates a double eyelet knitting structure with large squares. Figure 5(b) illustrates a double eyelet knitting structure with small squares. Following reference numbers are used in both Figure 5(a) and Figure 5(b);
- 51: left side of the eyelet structure;
- 52: right side of the eyelet structure;
- 53: guide bar 1 on the machine;
- 54: guide bar 2 on the machine;
- 55: back bed on the machine;
- 56: front bed on the machine.

In the eyelet knitting structure of large squares of Figure 5(a), the pattern is repeated every fourteen stitch rows while in the eyelet knitting structure of Figure 5(b), the pattern is repeated every ten stitch rows.

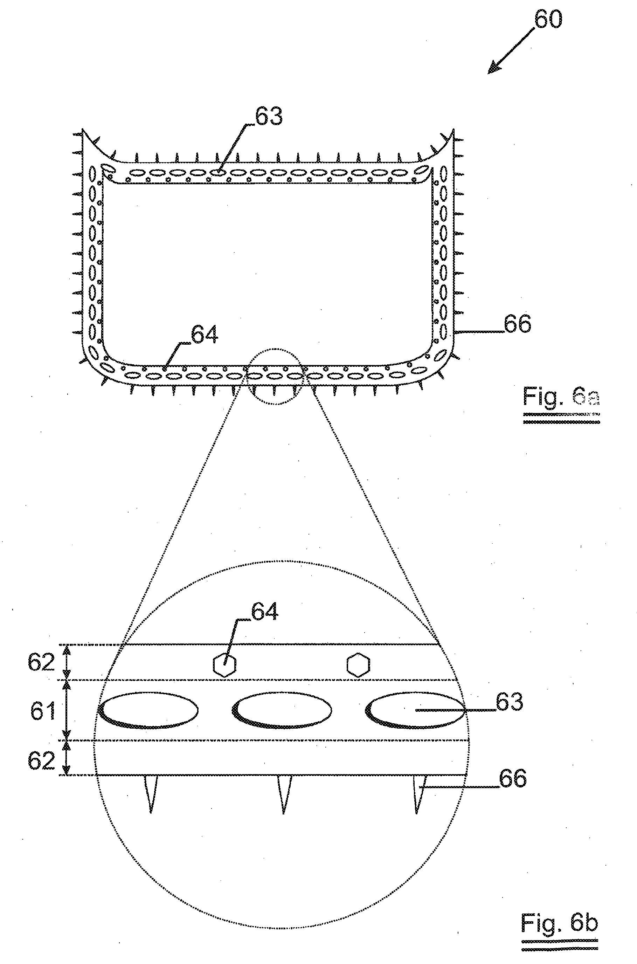

Figure 6(a) illustrates a quenching or tempering ring 60 and Figure 6(b) illustrates in more detail part of the tempering ring 60.

The quenching ring has two zones: a quenching or tempering zone 61 and a fixing zone 62. The quenching zone 61 is provided with apertures 63 to have the cooling air penetrating and reaching the glass. The fixing zone 62 may be provided with bolts 64 and pins 66 to fix the quenching fabric to the quenching ring 60.

The high-density strip 12, 32 of the fabric covers the quenching zone 61 while the low -density strips 14, 16, 34, 36 cover the fixing zone 62.

## Claims

1. A fabric (30) for covering at least partially a ring (60) for quenching glass which has been bent, said fabric (30) comprises at least three strips (32, 34, 36), a strip (32) of a high-density knitted structure for quenching the glass and at least two strips (34, 36) of lower density structure for attaching the fabric (30) to said ring (60).

2. A fabric according to claim 1, wherein said strip of a high-density knitted structure has between 8 and 115 stitches per square centimeter, preferably between 25 and 50 stitches per square centimeter.

3. A fabric according to claim 1 or claim 2, wherein said strips of a lower density structure have knitted structures with less stitches per square centimeter than said high-density structure.

4. A fabric according to any one of claims 1 - 3, wherein said fabric comprises three strips: a central zone of a high-density knitted structure for quenching the glass and two strips of a lower density for fixing the fabric to said ring.

5. A fabric according to any one of claims 1 to 4, wherein said strip of a high-density knitted structure has an air permeability of at least 500 l/dm²/min, and preferably at least 750 l/dm²/min when measured with an underpressure of 100 Pa.

6. A fabric according to any one of claims 1 to 5, wherein said strip of a high-density knitted structure is made from one hundred percent stainless steel yarns.

7. A fabric according to any one of claims 1 to 5, wherein said strip of high-density knitted structure is made from yarns comprising stainless steel fibers and man-made non-metal fibers such as PBO fibers or glass fibers.

8. A fabric according to any one of the preceding claims wherein at least one of the strips of a lower density structure is made from yarns comprising stainless steel fibers and man-made non-metal fibers such as PBO fibers or glass fibers.

9. A fabric according to any one of the preceding claims wherein the strip of said high-density knitted structure has a circular knitting structure, a weft knitting structure, a warp knitted structure or a Rachel-warp knitted structure.

10. A fabric according to any one of the preceding claims, wherein the strip of said high-density knitted structure has a demi-simple or tricot binding, a single or double Charmeuse binding or a satin binding.

11. A fabric according to any one of the preceding claims wherein at least one of the strips of a lower density knitted structure is an eyelet knitted fabric.

12. An assembly of a quenching ring and a fabric according to any one of the preceding claims, said quenching ring having two zones, a quenching zone with apertures to allow the air to penetrate and to cool down the glass, and a zone provided with fixations, said strip of said high-density knitted structure covering the quenching zone; and the strips of lower density knitted structure covering the zones provided with the fixations and being fixed to the fixations.

## Patentansprüche

1. Textiles Flächengebilde (30) zur zumindest teilweisen Abdeckung eines Rings (60) zum Abkühlen von Glas nach dessen erfolgtem Biegen, umfassend mindestens drei Streifen (32, 34, 36), und zwar einen Streifen (32) einer hochdichten Wirkstruktur zum Abkühlen des Glases und mindestens zwei Streifen (34, 36) einer geringerdichten Struktur zur Anbringung des textilen Flächengebildes (30) am Ring (60).

2. Textiles Flächengebilde nach Anspruch 1, bei dem der Streifen einer hochdichten Wirkstruktur je Quadratzentimeter zwischen 8 und 115 Maschen und bevorzugt zwischen 25 und 50 Maschen aufweist.

3. Textiles Flächengebilde nach Anspruch 1 oder 2, bei dem die Streifen einer geringerdichten Struktur Wirkstrukturen mit weniger Maschen je Quadratzentimeter als die hochdichte Struktur aufweisen.

4. Textiles Flächengebilde nach einem der Ansprüche 1 - 3, bei dem das Flächengebilde drei Streifen umfasst, und zwar eine Mittelzone hochdichter Wirkstruktur zum Abkühlen des Glases und zwei Streifen geringerer Dichte zur Befestigung des textilen Flächengebildes am Ring.

5. Textiles Flächengebilde nach einem der Ansprüche 1 bis 4, bei der der Streifen hochdichter Wirkstruktur eine bei einem Unterdruck von 100 Pa gemessene Luftdurchlässigkeit von mindestens 500 l/dm²/min und bevorzugt von mindestens 750 l/dm²/min aufweist.

6. Textiles Flächengebilde nach einem der Ansprüche 1 bis 5, bei dem der Streifen hochdichter Wirkstruktur aus hundertprozentigen Edelstahlfäden hergestellt ist.

7. Textiles Flächengebilde nach einem der Ansprüche 1 bis 5, bei dem der Streifen hochdichter Wirkstruktur aus Fäden mit Edelstahlfasern und Nichtmetallkunstfasern wie PBO-Fasern oder Glasfasern hergestellt ist.

8. Textiles Flächengebilde nach einem der vorhergehenden Ansprüche, bei dem mindestens einer der Streifen einer geringerdichten Struktur aus Fäden mit Edelstahlfasern und Nichtmetallkunstfasern wie PBO-Fasern oder Glasfasern hergestellt ist.

9. Textiles Flächengebilde nach einem der vorhergehenden Ansprüche, bei dem der Streifen hochdichter Wirkstruktur eine Rundstrickstruktur, eine Kulierwirkstruktur, eine Kettenwirkstruktur oder eine Raschelkettenwirkstruktur aufweist.

10. Textiles Flächengebilde nach einem der vorhergehenden Ansprüche, bei dem der Streifen hochdichter Wirkstruktur eine Halbeinfach- oder Trikotbindung, eine Charmeuseeinfach- oder -doppelbindung oder eine Satinbindung aufweist.

11. Textiles Flächengebilde nach einem der vorhergehenden Ansprüche, bei dem mindestens einer der Streifen geringerdichter Wirkstruktur mit einer durch Maschenbildungsverfahren hergestellten Öse versehen ist.

12. Anordnung aus Abkühlring und textilem Flächengebilde gemäß einem der vorhergehenden Ansprüche, wobei der Abkühlring zwei Zonen aufweist, und zwar eine Abkühlzone mit Öffnungen, durch die die Luft eintreten und das Glas abkühlen kann, und eine mit Befestigungen versehene Zone, wobei der Streifen hochdichter Wirkstruktur die Abkühlzone abdeckt und wobei die Streifen geringerer dichter Wirkstruktur die mit den Befestigungen versehenen Zonen abdecken und dabei an den Befestigungen befestigt sind.

## Revendications

1. Tissu (30) pour couvrir au moins partiellement une presse (60) pour tremper du verre qui a été courbé, ledit tissu (30) comprenant au moins trois bandes (32, 34, 36), une bande (32) d'une structure tricotée de haute densité pour tremper le verre, et au moins deux bandes (34, 36) d'une structure de densité inférieure pour attacher le tissu (30) à ladite presse (60).

2. Tissu selon la revendication 1, dans lequel ladite bande d'une structure tricotée de haute densité présente entre 8 et 115 mailles par centimètre carré, de préférence entre 25 et 50 mailles par centimètre carré.

3. Tissu selon la revendication 1 ou la revendication 2, dans lequel lesdites bandes d'une structure de densité inférieure présentent des structures tricotées qui comprennent moins de mailles par centimètre carré que ladite structure de haute densité.

4. Tissu selon l'une quelconque des revendications 1 à 3, dans lequel ledit tissu comprend trois bandes: une zone centrale d'une structure tricotée de haute densité pour tremper le verre, et deux bandes de densité inférieure pour fixer le tissu à ladite presse.

5. Tissu selon l'une quelconque des revendications 1 à 4, dans lequel ladite bande d'une structure tricotée de haute densité présente une perméabilité à l'air d'au moins 500 l/dm²/minute, et de préférence d'au moins 750 l/dm²/minute lorsqu'elle est mesurée avec une dépression de 100 Pa.

6. Tissu selon l'une quelconque des revendications 1 à 5, dans lequel ladite bande d'une structure tricotée de haute densité est constituée de cent pour cent de fils d'acier inoxydable.

7. Tissu selon l'une quelconque des revendications 1 à 5, dans lequel ladite bande d'une structure tricotée de haute densité est constituée de fils comprenant des fibres d'acier inoxydable et des fibres non métalliques artificielles telles que des fibres de PBO ou des fibres de verre.

8. Tissu selon l'une quelconque des revendications précédentes, dans lequel au moins une des bandes d'une structure de densité inférieure est constituée de fils comprenant des fibres d'acier inoxydable et des fibres non métalliques artificielles telles que des fibres de PBO ou des fibres de verre.

9. Tissu selon l'une quelconque des revendications précédentes, dans lequel la bande de ladite structure tricotée de haute densité présente une structure de tricotage circulaire, une structure de tricotage trame, une structure de tricotage chaîne ou une structure tricotée chaîne et Rachel.

10. Tissu selon l'une quelconque des revendications précédentes, dans lequel la bande de ladite structure tricotée de haute densité présente une armure demi-simple ou tricot, une armure simple ou double charmeuse, ou une armure satin.

11. Tissu selon l'une quelconque des revendications précédentes, dans lequel au moins une des bandes d'une structure tricotée de densité inférieure est un tissu tricoté ajouré.

12. Ensemble composé d'une presse de trempage et d'un tissu selon l'une quelconque des revendications précédentes, ladite presse de trempage comprenant deux zones, une zone de trempage comportant des ouvertures destinées à permettre à l'air de pénétrer et de refroidir le verre, et une zone pourvue de fixations, ladite bande d'une structure tricotée de haute densité couvrant ladite zone de trempage; et les bandes d'une structure tricotée de densité inférieure couvrant les zones pourvues de fixations et étant fixées aux fixations.
